# EUROPEAN PATENT SPECIFICATION

(11) **EP 0 716 797 B1**
(45) Date of publication and mention of the grant of the patent: **26.03.1997**
(21) Application number: 94926221.6
(22) Date of filing: 31.08.1994
(51) Int. Cl.: H04Q 7/32

(54) **MOBILE COMMUNICATION SYSTEM SELECTING AVAILABLE DOMAINS**
MOBILES KOMMUNIKATIONSSYSTEM MIT AUSWAHL VON VERFÜGBAREN DOMÄNEN
SYSTEME MOBILE DE COMMUNICATIONS A SELECTION DES DOMAINES DISPONIBLES

(30) Priority: 31.08.1993 NL 9301494
(43) Date of publication of application: 19.06.1996
(73) Proprietor: Koninklijke PTT Nederland N.V., 2509 CH Den Haag (NL)
(72) Inventor: LEIH, George, NL-2251 XN Voorschoten (NL); LENSINK, André, NL-2313 VG Leiden (NL); LEVELT, Willem, Gerard, NL-2274 KT Voorburg (NL)
(74) Representative: Beitsma, Gerhard Romano
(86) International application number: EP9402861
(87) International publication number: WO9507010

(56) References cited:
- EP-A- 0 526 764
- WO-A-93/16549
- WO-A-93/18606
- FIFTH NORDIC SEMINAR ON DIGITAL MOBILE RADIO COMMUNICATIONS, 1 December 1992, HELSINKI (FI) pages 185 - 194, XP457852 S. HANSEN 'THE STANDARDIZATION OF UMTS IN ETSI SMG5'
- DATABASE INSPEC INSTITUTE OF ELECTRICAL ENGINEERS, STEVENAGE, GB Inspec No. 4411051 18 April 1993, SLOMAN ET AL 'DOMAIN MANAGEMENT AND ACCOUNTING IN AN INTERNATIONAL CELLULAR NETWORK'
- ELECTRONICS AND COMMUNICATION ENGINEERING JOURNAL, vol.4, no.2, April 1992, LONDON GB pages 53 - 64, XP291697 P.S. GASKELL 'Developing technologies for personal communication networks'

## Description

### BACKGROUND OF THE INVENTION

The invention relates to a system for mobile communication, comprising a mobile station and a communication domain with a network and at least one communication station, which communication domain overlaps, at least in part, another communication domain in a certain area, as a result of which there are available to a mobile station, in the said area, a plurality of communication domains, the system being arranged for selecting, on the basis of a preference list, an available communication domain. A system of this type is known from e.g. GSM Recommendation 02.11 [1].

In systems for mobile communication it is possible, within a particular communication domain, to establish a communication link between a mobile station and one or more communication stations of said communication domain. Such a communication domain, hereinafter also described as domain, may, in this context, comprise a country, a region or, for example, just a factory site. The extent of a communication domain is determined by the range of the communication stations present in that domain. Said communication stations may comprise so-called base stations, but may also be constituted by e.g. satellites. In this text, the term base station will be used in the most general sense, i.e. meaning communication station in general and including satellites and other communication means.

Within a domain, for a user registered therein, mobile communication is possible via the communication stations of that domain. In so doing, on the one hand, a mobile station can call a base station in order, thus, to establish a connection, and, on the other hand, a base station can call a mobile station located in the domain in question and registered therein. Registration, in this context, therefore comprises not only the notification (registration proper) allowing a domain to reach a mobile station and thus to establish communication, but also the recording of the availability of a domain in a mobile station, thus allowing a mobile station to reach a domain. Communication between a mobile station and a domain can therefore only be established if registration has taken place.

In practice, various domains will coincide entirely or in part and therefore overlap. Thus, in regions in the vicinity of national frontiers, domains of the various countries will show a certain amount of overlap, and the relatively small communication domain of a factory site will be able to fall entirely within the communication domain of the country in question. If communication domains overlap, a number of problems manifest themselves, however, with existing systems for mobile communication, as will be explained below in more detail.

As a result of movements of the mobile station, different domains will continuously become available. Within the overlap areas it is possible for a mobile station, in most cases, to communicate with any domain of the overlapping domains. A domain in which a mobile station is registered at the instant the station enters an overlap area, need not be the optimal domain for that mobile station and for the particular service in question. Most known systems, however, do not envisage the option of altering the existing registration in a certain domain unless a mobile station leaves a domain. It will be obvious that this is undesirable in many cases.

For a user registered in a particular domain, several services may be available. Such services may include telephony proper (plain telephony), facsimile, voice mail, data transfer for computing purposes, etc. While the various services used by a particular user may all be routed via the same domain, it may be advantageous to use different domains for different services. For example, one domain may provide inexpensive connections having a relatively low signal to noise ratio. A user may prefer such a domain for voice transmissions because of the relative low costs involved, while preferring another domain, having higher rates but providing connections having a higher signal to noise ratio, for facsimile purposes. However, known systems do not provide for such a distinction of preferences.

International Patent Application WO-A-93 16549 discloses a communication system in which a mobile station can switch between dissimilar radiotelephone systems having overlapping coverage, such as a cellular system and a cordless system. A priority hierarchy is used to choose between the available systems, i.e. between the cellular and the cordless communication means. However, this known system does not distinguish between different services, nor does it deal with overlapping domains having identical communication means. Also, simultaneaous registrations in multiple domains are not supported.

European Patent Application EP-A-0 526 764 discloses the use of a single access number for a single subscriber in a communication system comprising a plurality of communication media. To this end, a register unit holds a plurality of access numbers, corresponding to the respective media, which are successively used when trying to access the subscriber in question. The said publication does not disclose the use of a list of domains a mobile station can register in to both place and receive calls, nor does it disclose a distinction between different services.

### SUMMARY OF THE INVENTION

The object of the invention is to overcome the abovementioned and other drawbacks of the prior art and to provide a system for mobile communication, by means of which it is possible to make a selection from a plurality of available domains while taking into account the nature of the service involved. A further object of the invention is to implement a system for mobile communication in such a way that at all times that communication domain is selected which is the most suitable for the service and the user or users of the mobile station in question. The system according to the invention to this end is characterized in that at least some domains comprise functionally identical communication means, and in that the system supports a plurality of different services, a separate preference list being provided for each user and for each service supported.

Owing to an available communication domain being selected on the basis of a preference list, so that it is possible to conclude from the preference list in question which communication domain is to be preferred from the point of view of the mobile station and the particular service provided by that mobile station, it is possible at all times to determine the "best" communication domain and to select it for establishing a connection. Owing to the selection taking place by the system itself, i.e. "automatically", the user need not devote any attention to the selection, and the "best" communication domain is selected for his particular service at all times.

Although it is possible to provide the system with a single preference list for each service, the system according to the invention is preferably arranged for using a plurality of preference lists for each service supported. Different users can each have their own preference lists. It is thus possible to manage a separate preference list for each user and for each service, i.e. a separate preference list for each user-service pair. In case only a single service is supported at any moment in time, the system according to the invention conveniently provides individual preference lists for its respective users.

In a first embodiment of the invention, a preference list is held in the (fixed) network of the system, e.g. in an exchange. This offers the advantage that the mobile stations can be constructed more simply and thus less expensively, and that the preference list(s) thus stored centrally can be kept up to date centrally in a simple manner in case of modifications in the network.

In a second embodiment, a preference list is stored in the mobile station. Thus, the at least one preference list is directly available to the mobile station in question. Advantageously, in the case of a plurality of users on one mobile station (terminal), a plurality of preference lists are present in that mobile station.

It is possible to make the preference lists and/or the available domains visible on the mobile station, for example on a suitable display screen such as an LCD screen. It is then further possible to enable the user, on the basis of the enumeration thus displayed, to modify his preference lists either temporarily or permanently. To this end, the mobile station may be provided with suitable input means such as a keyboard. In case a preference list has not yet been provided, modifying such a preference list implies inputting it.

Preferably, the system according to the invention is arranged for modifying (and/or inputting) preference lists with the aid of a card on which the preference lists are stored. A type of card suitable for this purpose is a magnetic card or a so-called chip card ("smart card"). By means of such a card, a user may inform a mobile station which he is going to use of his preferences in a simple and rapid manner. A mobile station may then advantageously be provided with means for checking the authorization of users, thus checking which users are entitled to make use of the station. In this case it is possible, either for an input preference list to be adjusted by a mobile station if a domain occurs in the preference list of a user, to which access by the user is not authorized, or for one or more input preferences to be ignored.

Alternatively, such a check of the authorization may have been provided in the network of that domain, for example in an exchange.

Preferably, the system according to the invention is arranged for determining the availability of communication domains on the basis of domain identification messages ("domain identifiers"). Such messages, which may be transmitted by the various domains, enable a mobile station to identify a domain and establish, on the basis of the identification, the availability of the domain in question. As a result, it is again possible, when leaving a particular domain, to select another available domain based on the preference list.

Advantageously, the system according to the invention is arranged for periodic checking of the selection made. This makes it possible to check whether the domain selected is still the "best" in the sense of the preference list in question. Thus, for example, the preference lists may have been modified, or a mobile user may have moved to an area where another and "better" domain is available. In the latter case, the other domain should be selected.

A mobile station for application in a system according to the invention may comprise transceiver means for transmitting and receiving, storage means for storing at least one preference list, and selection means for selecting domains (A, B) on the basis of the at least one preference list, and is characterized in that the transceiving means are arranged for supporting a plurality of different services in at least two domains having functionally identical communication means and in that the storage means are arranged for storing a separate preference list for each user and for each service supported. In case the preference lists are stored in the network, the means for recording preference lists may be omitted. Preferably, such a mobile station comprises means for inputting and/or modifying preference lists, said means advantageously being arranged for accepting a card on which the preference lists are stored.

It should be noted that the invention is not limited to systems in which (exclusively) mobile communication takes place. The invention can just as well be used in a communication system in which a fixed (terminal) station is situated in the overlap area of two or more communication domains. The selection of the domains may then depend on the availability of the respective domains, so that, if (the network of) one of the communication domains fails, another domain is chosen which is to be preferred after the failed domain. The selection of domains may also depend on the respective preferences of various users who communicate by means of the station in question. Mobile station can therefore also be interpreted as (fixed) station, terminal or apparatus. The invention is therefore not only applicable to a system for wireless communication, i.e. a system in which the communication between base stations and terminal stations takes place wirelessly, but also to a "fixed" communication system.

### REFERENCES

[1] GSM Recommendation 02.11, ETSI, November 1992.
[2] WO-A-93 16549
[3] EP-A-0 526 764
[4] DE-A-4 118 993
[5] Gaskell, P.S.: "Developing Technologies for personal communication networks", Electronics and Communication Engineering Journal, Vol.4, No. 2, London, April 1992.
These references are herewith incorporated in this text.

### BRIEF DESCRIPTION OF THE DRAWINGS

Fig. 1 shows, schematically, two partially overlapping communication domains.

Fig. 2 shows, schematically, the information exchange between a mobile station and a plurality of domains.

Fig. 3 likewise shows, schematically, the information exchange between a mobile station and a plurality of domains.

### DETAILED DESCRIPTION OF THE DRAWINGS

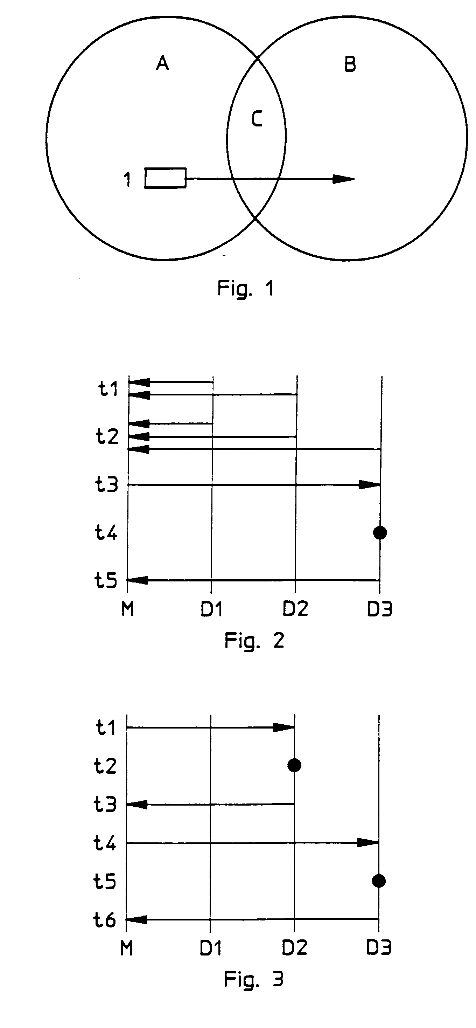

Fig. 1 depicts, schematically and by way of example, a first communication domain A and a second communication domain B. Each domain here corresponds to the area which is covered by a (mobile) communication network. The area where the two communication domains depicted overlap is indicated by C. In the communication domain A there is located a mobile station 1 which moves in the direction of the domain B, as indicated by the arrow. In each of the domains A and B there are located communication stations (fixed base stations) and other network elements which are not shown in figure 1 for the purpose of clarity of the drawing.

In the situation as shown, communication will be possible between the mobile station 1 and the domain A. As soon as the mobile station moves into the area C (and therefore also into the area B), communication will be possible with either the domain A or the domain B. If the mobile station 1 pursues its course and leaves the area C, communication will be possible exclusively with the domain B. If a communication link must be maintained with the mobile station 1, the communication with the domain A should be broken off when the area C is left, while the communication with the domain B must have been established.

As mentioned in the above, in the area C communication is possible either with the domain A or with the domain B. Existing systems for mobile communication only allow registration in one of said domains at a time. A choice will therefore have to be made, registration in the one domain precluding registration in the other domain. In many cases, one of the domains will be preferable to a particular user (or to a particular station). If the domains A and B shown represent, for example, the domains of the national mobile networks of two countries, it may be advantageous for a (mobile) user to choose his home domain, since he expects connections to other users in that domain. Alternatively, he may, for example, prefer the domain which has the lowest charges. As long as the user is in area C, a suitable choice, i.e. a suitable selection from the available domains A and B, may reduce the costs of a connection or have other advantages, such as a higher-quality connection. The system according to the invention allows such a selection to be made for each user and for each service.

Fig. 2 shows, schematically, how a mobile station performs a selection if preference lists are present in a mobile station. The information exchange between a mobile station M and three domains D1, D2 and D3 is here indicated by arrows which represent exchanged signals, the direction of the arrows corresponding to the direction in which the signals are transmitted. Here, successive events are shown successively from top to bottom (vertical time axis). The domains D1 and D2 of figure 2 may correspond with e.g. the domains A and B of figure 1. The mobile station M of figure 2 may correspond with the mobile station 1 of figure 1.

At time t1, the mobile station M receives signals from the domains D1 and D2. On the basis of these received signals, the station determines which domains are accessible. Said determination of the accessible domains in practice can be repeated many times, for example at other times not shown in figure 2. At time t2, signals are received from both domains D1 and D2, and from the domain D3. Since a change has occurred, the station M checks, on the basis of the preference lists (stored therein), whether it is necessary for a registration of that station, such as a registration of a user-service-pair associated with that station, to be transferred to another domain. If this is the case, the station requests a so-called domain update. At time t3, a signal designed for this purpose is transmitted by the mobile station M to the domain D3 which, in the example shown, has the highest preference. The domain update may be sent via the new domain (D3), but also via an old domain (D1 and/or D2) if that is still accessible at the time in question. After the domain update signal has been received (at time t3), any actions required are carried out (indicated by a point) in the network in question at time t4, such as the exchange of information between the old and the new domain, checking whether the domain update is permitted, and the like. If these actions have been completed, the mobile station M may be informed, at time t5, of the acceptance of the domain update.

Fig. 3 then shows, schematically, how a mobile station performs a selection if preference lists are present in a network. As in Fig. 2, the information exchange between a mobile station M and three domains D1, D2 and D3 is indicated by arrows which represent exchanged signals, the direction of the arrows corresponding to the direction in which the signals are transmitted, and the time axis (not shown per se) running vertically. As in figure 2, the domains D1 and D2 of figure 3 may correspond with e.g. the domains A and B of figure 1. The mobile station M of figure 3 may correspond with the mobile station 1 of figure 1.

In the example shown it has been assumed that (a user-service-pair of) the mobile station is registered in the domain D2. At time t1, and at further times (not shown), the mobile station M transmits signals to the network of the domain D2, which indicate which domains the mobile station M can reach, in other words which domains are potentially available, at that moment, to the mobile station in question. At time t2, the network checks, on the basis of the preference list (stored therein) and of the information thus received, whether a user or a user-service-pair of the mobile station M is still registered in the most-preferred domain. This action is depicted schematically in Fig. 3 by a point. If it is found that the user (or user-service-pair) is not registered in the most-preferred domain, the network may indicate at time t3 that the registration may be transferred to another domain, in the example shown domain D3. The mobile station may then request, at time t4, a domain update from the new domain (D3). In analogy to the case of Fig. 2, after the domain update signal has been received at time t4, any actions required are carried out (indicated by a point) in the network in question at time t5, such as the exchange of information between the old and the new domain, checking whether the domain update is permitted, and the like. If these actions have been completed, the mobile station M can be informed, at time t6, of the acceptance of the domain update.

As can be seen, inter alia from the above, the selection of an available, preferably optimal, communication domain is carried out with the objective of registering a mobile station, or users associated with that mobile station, respectively, in the domain selected and therefore to carry out a domain update. In other words, a preference list is used to carry out a domain update, at least if such an update is possible.

The preference list to be used for the selection may be compiled on the basis of preferences relating to, for example, charges, support of certain services, and reliability of the respective networks. The preference list may be designed in many different ways. Although the preference list may consist of a single enumeration of domains, in which, for example, the sequential order and/or a mark indicates the relative preference, it may be advantageous to subdivide the preference list into categories and/or groups.

It will be understood by those skilled in the art that the invention is not limited to the above-described embodiments and examples, and that many extensions and modifications are possible without departing from the scope of the present invention.

## Claims

1. System for mobile communication, comprising a mobile station (1) and a communication domain (A) with a network and at least one communication station, which communication domain (A) overlaps, at least in part, another communication domain (B) in a certain area (C), as a result of which there are available to a mobile station (1), in the said area (C), a plurality of communication domains (A, B), the system being arranged for selecting, on the basis of a preference list, an available communication domain, characterized in that at least some domains comprise functionally identical communication means and in that the system supports a plurality of different services, a separate preference list being provided for each user and for each service supported.

2. System according to Claim 1, wherein at least one preference list is stored in the network.

3. System according to Claim 1, wherein at least one preference list is stored in the mobile station.

4. System according to claim 1, wherein a mobile station is arranged for inputting and/or modifying preference lists.

5. System according to Claim 4, arranged for inputting and/or modifying a preference list with the aid of a card on which the preference lists are stored.

6. System according to any of the claims 1 through 5, arranged for periodic checking of the selection made.

7. System according to any of the claims 1 through 5, arranged for checking the selection made with each modification of the relative preference list.

8. Mobile station (1) for use in a system according to any of the claims 1 through 5, comprising transceiver means for transmitting and receiving, storage means for storing at least one preference list, and selection means for selecting domains (A, B) on the basis of at least one preference list, characterized in that the transceiving means are arranged for supporting a plurality of different services in at least two domains having functionally identical communication means, and in that the storage means are arranged for storing a separate preference list for each user and for each service supported.

9. Mobile station according to claim 8, further comprising input means for inputting and/or modifying preference lists.

10. Mobile station according to claim 9, wherein said input means are arranged for accepting a card on which preference lists are stored.

11. Mobile station according to claim 8, arranged for periodic checking of the selection made.

12. Mobile station according to claim 8, arranged for checking the selection made with each modification of the preference list.

## Patentansprüche

1. System für mobile Kommunikation, umfassend eine mobile Station (1) und ein Kommunikationsgebiet (A) mit einem Netzwerk und mindestens eine Kommunikationsstation, wobei dieses Kommunikationsgebiet (A) ein anderes Kommunikationsgebiet (B) mindestens teilweise in einem bestimmten Bereich (C) überschneidet, wodurch für eine mobile Station (1) in diesem Bereich (C) eine Mehrzahl Kommunikationsgebiete (A, B) verfügbar sind, wobei das System zum Auswählen, auf der Basis einer Präferenzliste, eines verfügbaren Kommunikationsgebiets ausgebildet ist, **dadurch gekennzeichnet, dass** mindestens einige Gebiete funktionell identische Kommunikationsmittel umfassen, und dass das System eine Mehrzahl verschiedener Dienstleistungen unterstützt, wobei für jeden Benutzer und für jede unterstützte Dienstleistung eine separate Präferenzliste zur Verfügung gestellt wird.

2. System nach Anspruch 1, **worin** mindestens eine Präferenzliste im Netzwerk gespeichert ist.

3. System nach Anspruch 1, **worin** mindestens eine Präferenzliste in der mobilen Station gespeichert ist.

4. System nach Anspruch 1, **worin** eine mobile Station zum Eingeben und/oder Verändern von Präferenzlisten ausgebildet ist.

5. System nach Anspruch 4, das zum Eingeben und/oder Verändern einer Präferenzliste mittels einer Karte ausgebildet ist, auf der die Präferenzlisten gespeichert sind.

6. System nach einem der Ansprüche 1 bis 5, das zum periodischen Überprüfen der getroffenen Auswahl ausgebildet ist.

7. System nach einem der Ansprüche 1 bis 5, das zum Überprüfen der bei jedem Verändern der entsprechenden Präferenzliste getroffenen Auswahl ausgebildet ist.

8. Mobile Station (1) zur Anwendung in einem System nach einem der Ansprüche 1 bis 5, umfassend Sende/Empfangs-Mittel zum Übertragen und Empfangen, Speichermittel zum Speichern mindestens einer Präferenzliste und Auswählmittel zum Auswählen von Gebieten (A, B) auf der Basis mindestens einer Präferenzliste, **dadurch gekennzeichnet, dass** die Sende/Empfangs-Mittel zum Unterstützen einer Mehrzahl verschiedener Dienstleistungen in mindestens zwei Gebieten mit funktionell identischen Kommunikationsmitteln ausgebildet sind, und dass die Speichermittel zum Speichern einer separaten Präferenzliste für jeden Benützer und für jede unterstützte Dienstleistung ausgebildet sind.

9. Mobile Station nach Anspruch 8, die weiter Eingabemittel umfasst, welche zum Eingeben und/oder Verändern von Präferenzlisten ausgebildet sind.

10. Mobile Station nach Anspruch 9, **worin** diese Eingabemittel zum Annehmen einer Karte ausgebildet sind, auf denen Präferenzlisten gespeichert sind.

11. Mobile Station nach Anspruch 8, die zum periodischen Überprüfen der getroffenen Auswahl ausgebildet ist.

12. Mobile Station nach Anspruch 8, die zum Überprüfen der bei jedem Verändern der Präferenzliste getroffenen Auswahl ausgebildet ist.

## Revendications

1. Système mobile de communications, comprenant une station mobile (1) et un domaine de communication (A) comportant un réseau et au moins une station de communication, ce domaine de communication (A) recouvrant, au moins en partie, un autre domaine de communication (B) dans une certaine zone (C), d'où il résulte qu'une pluralité de domaines de communication (A, B) sont disponibles pour une station mobile (1) dans ladite zone (C), le système étant agencé pour sélectionner, selon une liste de préférences, un domaine de communication disponible, caractérisé en ce qu'au moins certains domaines comprennent des moyens de communication fonctionnellement identiques et en ce que le système supporte une pluralité de services différents, une liste de préférences séparée étant prévue pour chaque utilisateur et pour chaque service supporté.

2. Système selon la revendication 1, dans lequel au moins une liste de préférences est stockée dans le réseau.

3. Système selon la revendication 1, dans lequel au moins une liste de préférences est stockée dans la station mobile.

4. Système selon la revendication 1, dans lequel une station mobile est agencée pour entrer et/ou modifier des listes de préférences.

5. Système selon la revendication 4, agencé pour entrer et/ou modifier une liste de préférences à l'aide d'une carte sur laquelle les listes de préférences sont stockées.

6. Système selon l'une quelconque des revendications 1 à 5, agencé pour le contrôle période de la sélection faite.

7. Système selon l'une quelconque des revendications 1 à 5, agencé pour contrôler la sélection faite à chaque modification de la liste de préférences relative.

8. Station mobile (1) à utiliser dans un système selon l'une quelconque des revendications 1 à 5, comprenant des moyens émetteurs-récepteurs pour émettre et recevoir, des moyens de stockage pour stocker au moins une liste de préférences, et des moyens de sélection pour sélectionner des domaines (A, B) selon au moins une liste de préférences, caractérisée en ce que les moyens émetteurs-récepteurs sont agencés pour supporter une pluralité de services différents dans au moins deux domaines comportant des moyens de communication fonctionnellement identiques, et en ce que les moyens de stockage sont agencés pour stocker une liste de préférences séparée pour chaque utilisateur et pour chaque service supporté.

9. Station mobile selon la revendication 8, comprenant en outre des moyens d'entrée pour entrer et/ou modifier des listes de préférences.

10. Station mobile selon la revendication 9, dans laquelle lesdits moyens d'entrée sont agencés pour accepter une carte sur laquelle des listes de préférences sont stockées.

11. Station mobile selon la revendication 8, agencée pour le contrôle périodique de la sélection faite.

12. Station mobile selon la revendication 8, agencée pour contrôler la sélection faite à chaque modification de la liste de préférences.
